# EUROPÄISCHE PATENTANMELDUNG

(11) **EP 4 442 396 A1**
(43) Veröffentlichungstag der Anmeldung: **09.10.2024**
(21) Anmeldenummer: 24159407.6
(22) Anmeldetag: 23.02.2024
(51) Int. Cl.: B23D 33/00, B26D 3/16, B23D 21/10, E03D 11/00, B23D 33/12

(54) **VORRICHTUNG UND VERFAHREN ZUM ABLÄNGEN UND/ODER ANZEICHNEN**

(30) Priorität: 28.02.2023 DE 102023104944
(71) Anmelder: Villeroy & Boch AG, 66693 Mettlach (DE)
(72) Erfinder: Krämer, Jörg, 66663 Merzig (DE); Stahl, Dirk, 54441 Ayl (DE); Terner, Mark, 66798 Wallerfangen (DE); Brummelman, Daniël, 7543TV Enschede (NL); van der Kamp, Hedzer Michiel Adriaan, 7205 GJ Zutphen (NL)
(74) Vertreter: Meissner Bolte Partnerschaft mbB

(57) **Zusammenfassung**

Die Erfindung betrifft eine Vorrichtung zum Ablängen und/oder Anzeichnen eines Rohres (100) für ein Sanitärprodukt, mit Ringen, insbesondere einem ersten und zweiten Ring (10, 11), und einer Abstandshaltereinrichtung (12), die die Ringe (10, 11) abstandsvariabel verbindet, wobei die Ringe (10,11) auf dem Rohr (100) im Gebrauch verschiebbar sind und der Abstand zwischen den Ringen (10,11) durch die Abstandshaltereinrichtung (12) fixierbar ist.

## Beschreibung

Die Erfindung betrifft eine Vorrichtung zum Ablängen und/oder Anzeichnen eines Rohres für ein Sanitärprodukt.

Für die Montage einer Toilette, ist es wesentlich, die benötigte Länge eines Zu- und/oder Ablaufrohres, zu messen sowie anzuzeichnen und gegebenenfalls das Rohr abzulängen. In der Regel wird der abzulängende Teil des Rohres durch die Einschubtiefe des Rohres gemessen sowie manuell angezeichnet und mit einem Schneidwerkzeug abgelängt. Bei diesem Vorgehen besteht das Problem der Fehleranfälligkeit. Des Weiteren liegt ein erhöhter Arbeitsaufwand aufgrund einer hohen Anzahl an Arbeitsschritten vor.

Der Erfindung liegt die Aufgabe zugrunde, das Messen und Ablängen eines Rohres für ein Sanitärprodukt zu vereinfachen und somit den Arbeitsaufwand bei der Produktmontage zu reduzieren sowie die Fehleranfälligkeit des Vorgehens zu verringern.

Der Erfindung liegt ferner die Aufgabe zugrunde, ein Verfahren zum Ablängen und/oder Anzeichnen eines Rohres für ein Sanitärprodukt mit einer derartigen Vorrichtung anzugeben.

Erfindungsgemäß wird diese Aufgabe durch eine Vorrichtung mit den Merkmalen des Anspruchs 1 gelöst. Mit Blick auf das Verfahren wird diese Aufgabe erfindungsgemäß durch den Gegenstand des Anspruchs 11 gelöst.

Konkret wird die Aufgabe durch eine Vorrichtung zum Ablängen und/oder Anzeichnen eines Rohres für ein Sanitärprodukt mit Ringen und einer Abstandshaltereinrichtung gelöst. Die Ringe, insbesondere ein erster und zweiter Ring, sind durch die Abstandshaltereinrichtung abstandsvariabel verbunden und im Gebrauch auf dem Rohr verschiebbar. Der Abstand zwischen den Ringen ist durch die Abstandshaltereinrichtung fixierbar.

Mit Blick auf das Verfahren wird die Aufgabe durch ein Verfahren zum Ablängen und/oder Anzeichnen eines Rohres mit Ringen und einer Abstandshaltereinrichtung gelöst. Die Ringe, insbesondere ein erster und zweiter Ring, sind durch die Abstandshaltereinrichtung abstandsvariabel verbunden und im Gebrauch auf dem Rohr verschiebbar. Der Abstand zwischen den Ringen ist durch die Abstandshaltereinrichtung fixierbar. Im Gebrauch werden die Ringe auf dem Rohr verschoben, wobei der erste Ring durch wandseitiges Einschieben des Rohres in Produktrichtung verschoben wird und der zweite Ring durch produktseitiges Einschieben des Rohres in Wandrichtung verschoben wird. Der Abstand zwischen den Ringen wird durch die Abstandshaltereinrichtung fixiert. Die Ringe werden mit fixiertem Abstand an das Ende des Rohres verschoben bis der erste Ring bündig mit dem wandseitigen Rohrende abschließt. Das Rohr wird am zweiten Ring angezeichnet und/oder abgelängt.

Die Erfindung hat verschiedene Vorteile.

So wird die Produktmontage vereinfacht und der Arbeitsaufwand reduziert. Dazu sind die Ringe auf dem Rohr verschiebbar und durch die Abstandshaltereinrichtung abstandsvariabel verbunden. Des Weiteren ist der Abstand zwischen den Ringen durch die Abstandshaltereinrichtung fixierbar. Durch wand- und produktseitiges Einschieben des Rohres werden die Ringe auf dem Rohr verschoben, wodurch sich jener Abstand zwischen den Ringen einstellt, der der Länge entspricht, um die das Rohr zu kürzen ist. Da sich dieser Abstand zwischen den Rohrenden ergibt, wird dieser an das Rohrende überführt, um das Ablängen des Rohres zu ermöglichen. Das Fixieren des Abstands zwischen den Ringen ermöglicht dabei ein sicheres Überführen an das Rohrende. Es ist also nicht mehr nötig, die Rohrabschnitte einzeln abzumessen und den abzulängenden Abstand auszurechnen. Außerdem wird die Fehleranfälligkeit reduziert, da das Messen nicht manuell durchgeführt wird.

Des Weiteren erlaubt die Erfindung das Rohr abzulängen oder alternativ anzuzeichnen. Dadurch ist die Erfindung flexibel einsetzbar. Durch die Wahl einer der alternativen Anwendungsmöglichkeiten ist eine Anpassung an die Bedingungen bei der Produktmontage möglich.

Bevorzugte Ausführungsformen der Erfindung sind in den Unteransprüchen angegeben.

Vorzugsweise sind die Ringe auf dem Rohr fixierbar. Diese Ausführungsform hat den Vorteil, dass der abzulängende und/oder zu messenden Abstand sicher eingestellt werden kann. Des Weiteren ermöglicht die Fixierung der Ringe ein sicheres Ablängen und/oder Anzeichnen des Rohres. Dabei stellt die Fixierung der Ringe auf dem Rohr sicher, dass ein unerwünschtes Verschieben der Ringe auf dem Rohr weder beim Einstellen des zu messenden und/oder abzulängenden Abstands noch beim Anzeichnen oder Ablängen des Rohres auftritt.

Es ist bevorzugt, dass die Ringe auf dem Rohr durch einen Schiebemechanismus, der in Umfangsrichtung des Rings betätigbar ist, fixierbar sind. Diese Ausführungsform zeichnet sich durch eine einfache, benutzerfreundliche Handhabung aus. Des Weiteren ist diese Ausführungsform vorteilhaft, da der Schiebemechanismus platzsparend in Umfangsrichtung der Ringe angeordnet ist.

Bei einer weiteren Ausführungsform weist die Abstandshaltereinrichtung einen Sperrmechanismus auf, der am ersten Ring befestigt ist. Diese Ausführungsform hat den Vorteil, dass der Abstand zwischen den Ringen fixierbar ist, wodurch ein sicheres Überführen des gemessenen Abstands an das Rohrende ermöglicht wird. Durch die Befestigung des Sperrmechanismus am ersten Ring wird eine kompakte Ausführungsform erreicht.

Die Abstandshaltereinrichtung weist vorzugsweise ein flexibles Verbindungselement auf, das bandartig ausgestaltet ist. Dadurch wird die Handhabung vereinfacht, beispielsweise bei der Montage der Vorrichtung.

Des Weiteren ist es bevorzugt, dass der Sperrmechanismus wenigstens ein Klemmelement, insbesondere drei Klemmelemente, die gleichmäßig über den Umfang des ersten Rings angeordnet sind, umfasst, mit dem das Verbindungselement arretierbar ist. Diese Ausführungsform bietet eine Möglichkeit der Fixierung des Abstands zwischen den Ringen, wodurch der gemessene Abstand sicher an das Rohrende überführt werden kann. Des Weiteren ist diese Ausführungsform vorteilhaft, da die Klemmelemente platzsparend in Umfangsrichtung der Ringe angeordnet ist.

Bei einer weiteren Ausführungsform der Vorrichtung ist der zweite Ring mit einem Schneidmechanismus verbunden oder verbindbar, mit dem das Rohr ablängbar ist. Diese Ausführungsform hat den Vorteil, dass das Messen und Ablängen des Rohres in einer Vorrichtung kombiniert wird, wodurch eine Verringerung des Arbeitsaufwands bei der Montage des Sanitärprodukts resultiert.

Eine besonders bevorzugte Ausführungsform umfasst einen Schneidmechanismus mit einer integrierten Schneide, insbesondere einem Messer oder ein Stichbeitel, wobei der Schneidmechanismus in Umfangsrichtung des Rings drehbar am zweiten Ring befestigt ist. Die Handhabung dieser Ausführungsform ist einfach und sicher. Die Verwendung eines separaten Schneidwerkzeugs zum Ablängen des Rohres ist nicht notwendig. Dies vereinfacht die Produktmontage und reduziert den Arbeitsaufwand.

Vorzugsweise kann der Schneidmechanismus ein verbindbares Schneidwerkzeug, insbesondere eine Stichsäge, einen Elektrobohrer oder einen Laser, umfassen, das an die Vorrichtung angeschlossen wird. Bei Rohren mit großer Wandstärke kann dies vorteilhaft sein.

Bei einer weiteren Ausführungsform ist der zweite Ring mit einem Mechanismus zum Anzeichnen des Rohres, insbesondere einem Körner, verbunden ist, wobei der Mechanismus zum Anzeichnen in Umfangsrichtung des Rings drehbar am zweiten Ring befestigt ist. Diese Ausführungsform ist vorteilhaft, da separate gebräuchliche Schneidwerkzeuge, wie eine Säge, verwendet werden können. Das Anzeichnen des abzulängenden Teils des Rohres wird bei dieser Ausführungsform durch den drehbar am zweiten Ring befestigten Mechanismus zum Anzeichnen des Rohres vereinfacht.

Die Erfindung wird nachstehend anhand von Ausführungsbeispielen unter Bezug auf die beigefügten schematischen Zeichnungen mit weiteren Einzelheiten näher beschrieben. In diesen zeigen
- Fig. 1: eine Seitenansicht eines erfindungsgemäßen Ausführungsbeispiels der Vorrichtung zum Ablängen und/oder Anzeichnen eines Rohres für ein Sanitärprodukt;
- Fig. 2: einen vergrößerten Ausschnitt der Vorrichtung gemäß Fig. 1, wobei der Schiebemechanismus zum Fixieren der Ringe auf dem Rohr dar-gestellt ist;
- Fig. 3: einen vergrößerten Ausschnitt der Vorrichtung gemäß Fig. 1, wobei der Sperrmechanismus mit den Klemm- und Verbindungselementen dargestellt ist;
- Fig. 4: einen Schnitt der Vorrichtung gemäß Fig. 1, wobei der Mechanismus zum Anzeichnen des Rohres dargestellt ist;
- Fig. 5: einen Schnitt der Vorrichtung gemäß Fig. 1, wobei der Schneidme-chanismus mit integrierter Schneide dargestellt ist;
- Fig. 6a-c: Seitenansichten der Vorrichtung gemäß Fig. 1 in verschiedenen Zuständen im Verlauf des Verfahrens.

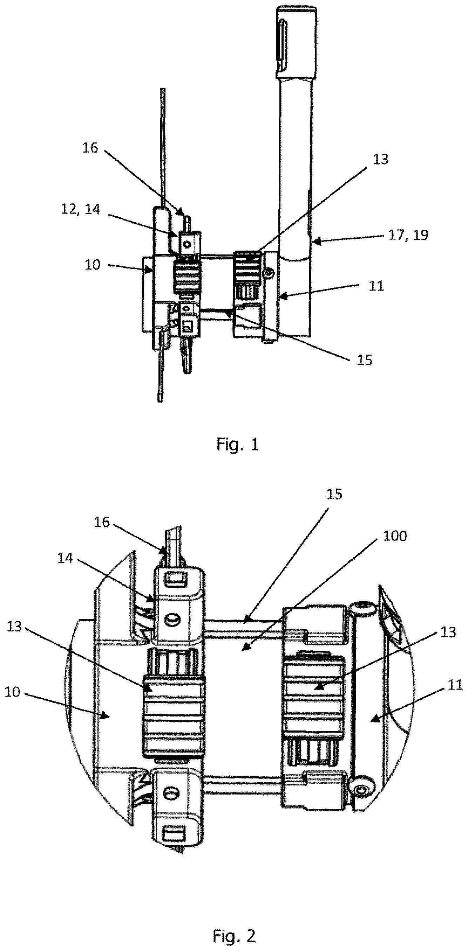

Figur 1 zeigt ein erfindungsgemäßes Ausführungsbeispiel einer Vorrichtung zum Ablängen und/oder Anzeichnen eines Rohres 100 für ein Sanitärprodukt. Dabei handelt es sich um die Anwendung der Vorrichtung zum Ablängen und/oder Anzeichnen eines Zu- oder Ablaufrohres für die Montage von Toiletten. Andere Anwendungen sind denkbar, beispielsweise die Montage von Bidets. Die dargestellte Vorrichtung umfasst Ringe, insbesondere einen ersten und einen zweiten Ring 10, 11. Aus Gründen der besseren Übersichtlichkeit ist die Vorrichtung in Fig. 1 ohne ein Produkt und ohne Wandelemente dargestellt.

Die Ringe 10, 11 weisen den selben Innendurchmesser auf. Der Innendurchmesser entspricht in etwa dem Außendurchmesser des abzulängenden Rohres 100. Der Innendurchmesse der Ringe 10, 11 ist an den Außendurchmesser des abzulängenden Rohres 100 so angepasst, dass die Ringe 10, 11 im Gebrauch auf dem Rohr 100 verschiebbar sind. Dies bedeutet, dass die Ringe 10, 11 auf dem Rohr 100 beweglich sind und die Position der Ringe 10, 11 zueinander auf dem Rohr 100 veränderbar ist. Dabei ist es möglich die Ringe 10, 11 durch das Ausüben von Druck manuell in axialer Richtung der Ringe 10, 11 auf dem Rohr 100 zu bewegen.

Das in Figur 1 gezeigte Ausführungsbeispiel weist eine Abstandshaltereinrichtung 12 auf, die die Ringe 10, 11 abstandsvariabel verbindet. Die abstandsvariable Verbindung zwischen den Ringen 10, 11 ermöglicht es die Ringe 10, 11 auf dem Rohr 100 in unterschiedlichen Abständen zueinander zu positionieren, wobei die Ringe 10, 11 zusammenhängend sind.

Die Abstandshaltereinrichtung 12 ermöglicht das Fixieren des Abstands zwischen den Ringen 10, 11. Dadurch ist die relative Position der Ringe 10, 11 zueinander in axialer Richtung der Ringe 10, 11 fest.

Die in Figur 1 gezeigte Abstandshaltereinrichtung 12 umfasst einen Sperrmechanismus 14, der auf dem ersten Ring 10 befestigt ist. Durch die Befestigung des Sperrmechanismus 14 am ersten Ring 10 ist das Ausführungsbeispiel kompakt aufgebaut.

In Figur 1 ist zu erkennen, dass der Sperrmechanismus 14 Klemmelemente 16 aufweist, mit denen der Abstand zwischen den Ringen 10, 11 fixierbar ist. Das hier gezeigte Ausführungsbeispiel umfasst drei Klemmelemente 16, die gleichmäßig über den Umfang des ersten Rings 10 angeordnet sind. Eine andere Anzahl an Klemmelementen 16 ist denkbar.

Des Weiteren weist die in Figur 1 dargestellte Abstandshaltereinrichtung 12 Verbindungselemente 15 auf, die die Ringe 10, 11 verbinden. Das hier gezeigte Ausführungsbeispiel umfasst drei Verbindungselemente 15, die gleichmäßig über den Umfang der Ringe 10, 11 angeordnet sind. Eine andere Anzahl an Verbindungselementen 15 ist denkbar.

Die gezeigten Verbindungselemente 15 sind flexibel und bandartig ausgestaltet. Es ist zu erkennen, dass die Verbindungselemente 15 umbiegbar sind. Dadurch wird im Gebrauch eine wandseitige Kollision der Vorrichtung, insbesondere eine Kollision der Verbindungselemente 15 mit Wandelementen, vermieden wird. Die Verbindungselemente 15 können Kabelbinder sein. Andere Varianten von Verbindungselementen 15 sind denkbar.

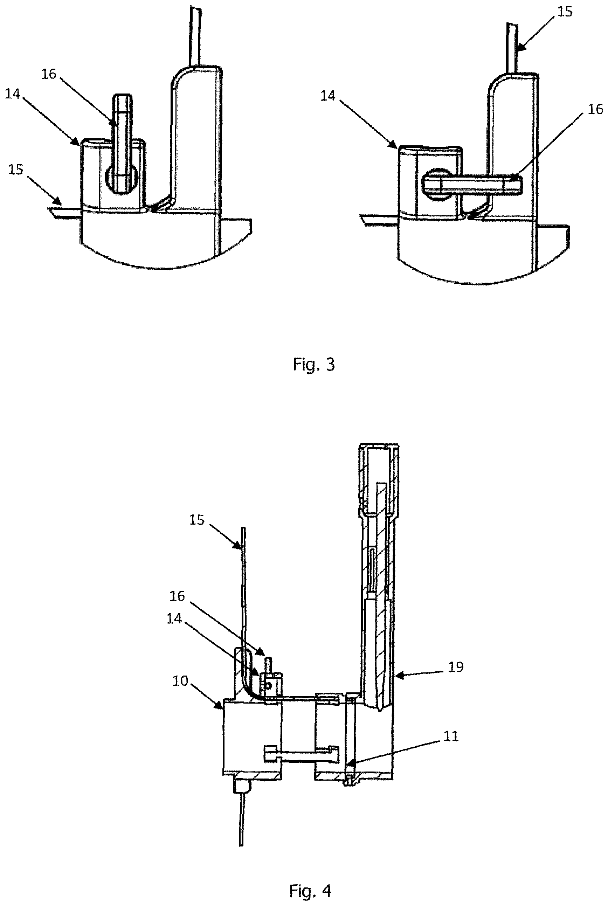

In Figur 3 ist ein vergrößerter Ausschnitt eines erfindungsgemäßen Ausführungsbeispiels der Vorrichtung dargestellt, wobei der Sperrmechanismus 14 zum Fixieren des Abstands zwischen den Ringen 10, 11 gut zu erkennen ist.

Figur 3 zeigt links jene Position des Klemmelements 16, durch die das Verbindungselement 15 arretiert und der Abstand zwischen den Ringen 10, 11 fixiert wird. Dadurch ist die Position der Ringe 10, 11 zueinander in axialer Richtung der Ringe 10, 11 fest. Das Arretieren des Verbindungselements 15 kann kraftschlüssig erfolgen. Andere Verbindungsarten sind denkbar.

Figur 3 zeigt rechts jene Position des Klemmelements 16, durch die das Verbindungselement 15 gelöst und der Abstand zwischen den Ringen 10, 11 variabel ist. Dadurch ist die relative Position der Ringe 10, 11 zueinander in axialer Richtung der Ringe 10, 11 veränderbar.

Ferner zeigt Figur 3 die Führung des Verbindungselements 15 zur Vermeidung einer Kollision des Verbindungselements 15 mit Wandelementen. Dabei werden die Verbindungselemente 15 in Umfangsrichtung des Rohres 100 von dem Rohr 100 weggeführt. Es ist gut zu erkennen, dass das Verbindungselement 15 flexibel und umbiegbar ausgestaltet ist.

In Figur 1 ist ferner ein Schiebemechanismus 13 dargestellt, mit dem die Ringe 10, 11 auf dem Rohr 100 fixierbar sind. Durch die Fixierung der Ringe 10, 11 sind die Ringe 10, 11 auf dem Rohr 100 unbeweglich, die Position der Ringe 10, 11 auf dem Rohr 100 ist somit nicht veränderbar. Die Vorrichtung ist in Figur 1 aus Gründen der besseren Übersichtlichkeit nicht auf dem Rohr 100 dargestellt. Im Gebrauch sind die Ringe 10, 11 auf dem Rohr 100 platziert.

Das in Figur 1 dargestellte Ausführungsbeispiel weist je einen Schiebemechanismus 13 auf dem ersten 10 und zweiten Ring 11 auf, der in Umfangsrichtung der Ringe 10, 11 betätigbar ist, wodurch eine platzsparende Anordnung erreicht wird.

In Figur 2 ist ein vergrößerter Ausschnitt eines erfindungsgemäßen Ausführungsbeispiels der Vorrichtung dargestellt, wobei der Schiebemechanismus 13 zum Fixieren der Ringe 10, 11 auf dem Rohr 100 gut zu erkennen ist. Die Vorrichtung ist in Figur 2 auf einem Rohr 100 platziert. Der Schiebemechanismus 13 ist in Umfangsrichtung der Ringe 10, 11 betätigbar, wobei je ein Schiebemechanismus 13 auf dem ersten 10 und zweiten Ring 11 angeordnet ist. In der dargestellten Position des Schiebemechanismus 13 auf dem ersten 10 und zweiten Ring 11 sind die Ringe 10, 11 auf dem Rohr 100 verschiebbar. Durch Betätigen des Schiebemechanismus 13 in Umfangsrichtung der Ringe 10, 11 wird eine Fixierung der Ringe 10, 11 auf dem Rohr 100 erreicht.

Figur 1 zeigt, dass der zweite Ring 11 mit einem Schneidmechanismus 17 und/oder einem Mechanismus zum Anzeichnen 19 des Rohres 100 verbunden ist, mit dem das Rohr 100 abgelängt und/oder angezeichnet werden kann. Der Schneidmechanismus 17 und/oder der Mechanismus zum Anzeichnen 19 umfasst einen Griff, der in Umfangsrichtung der Ringe 10, 11 über den zweiten Ring 11 hervorsteht. Der Griff ermöglicht beim Betätigen des Schneidmechanismus 17 und/oder des Mechanismus zum Anzeichnen 19 das Aufbringen einer Hebelwirkung und somit eine einfache Handhabung.

Figur 4 zeigt einen Schnitt eines erfindungsgemäßen Ausführungsbeispiels der Vorrichtung, wobei der Mechanismus zum Anzeichnen 19 des Rohres 100 gut zu erkennen ist. Der Mechanismus zum Anzeichnen 19 des Rohres 100 ist drehbar in Umfangsrichtung des Ringes 10, 11 mit dem zweiten Ring 11 verbunden. Das Anzeichnen des Rohres 100 erfolgt durch Drücken und gleichzeitiges Drehen des Griffes in Umfangsrichtung des Rohres 100.

Es ist zu erkennen, dass der Mechanismus zum Anzeichnen 19 des Rohres 100 insbesondere einen Körner umfasst, mit dem das Rohr 100 angezeichnet werden kann. Andere Mechanismen zum Anzeichnen des Rohres 100 sind denkbar.

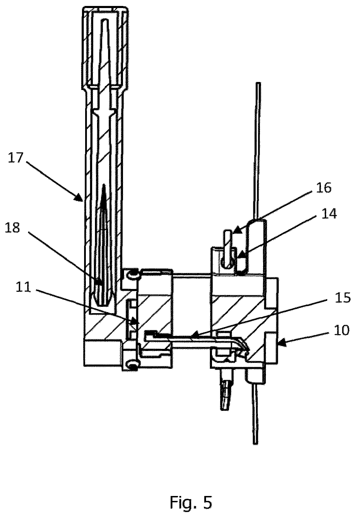

Figur 5 zeigt eine Schnittansicht eines erfindungsgemäßen Ausführungsbeispiels der Vorrichtung, wobei der Schneidmechanismus 17 gut zu erkennen ist. Der Schneidmechanismus 17 ist drehbar in Umfangsrichtung des Ringes 10, 11 mit dem zweiten Ring 11 verbunden. Das Ablängen des Rohres 100 erfolgt durch Drücken und gleichzeitiges Drehen des Griffes in Umfangsrichtung des Rohres 100.

Es ist zu erkennen, dass der Schneidemechanismus 17 eine integrierte Schneide 18 umfasst, mit der das Rohr 100 ablängbar ist. Andere Schneidmechanismen sind denkbar.

In einem weiteren Ausführungsbeispiel der Vorrichtung kann der Schneidmechanismus 17 ein anschließbares Schneidwerkzeug, insbesondere eine Stichsäge, einen Elektrobohrer oder einen Laser, umfassen.

Ferner zeigt Figur 1, dass der erste Ring am wandseitigen (in Fig. 1 linken) Ende einen Absatz aufweist, der wandseitig einschiebbar ist. Dieser Absatz dient als zusätzlicher Sicherheitsabstand, der beim Ablängen und/oder Anzeichne des Rohres zu berücksichtigen ist und gewährleistet, dass das Rohr nicht zu lang ist.

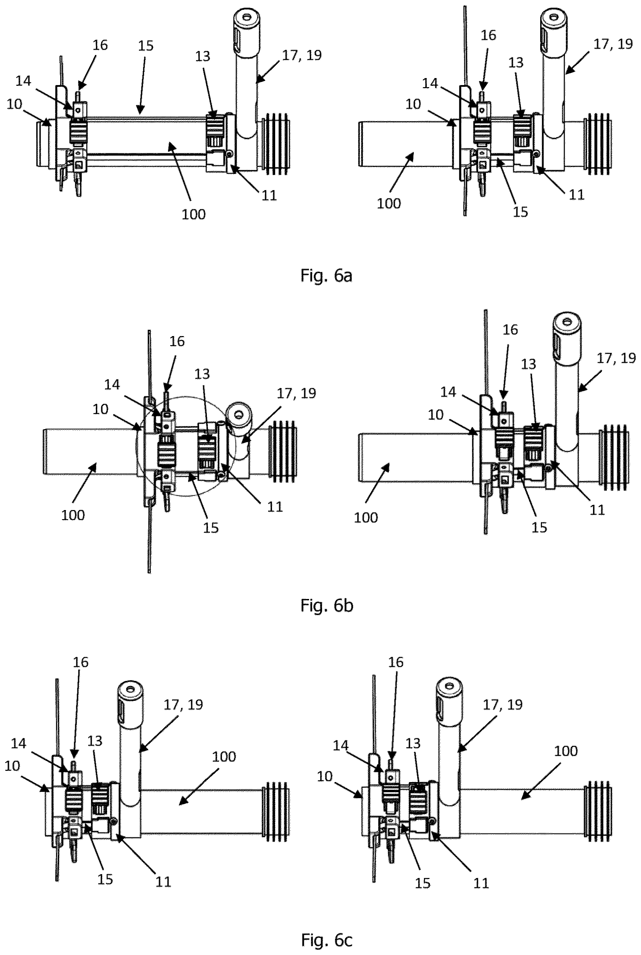

In den Figuren 6a bis c sind Seitenansichten der Vorrichtung in verschiedenen Zuständen im Verlauf des Verfahrens zum Ablängen und/oder Anzeichnen eines Rohres 100 gezeigt. Dabei handelt es sich um die Anwendung eines erfindungsgemäßen Ausführungsbeispiels einer Vorrichtung zum Ablängen und/oder Anzeichnen eines Rohres 100, insbesondere eines Zu- oder Ablaufrohres für die Montage eines Sanitärprodukts, wie beispielsweise einer Toilette.

Figur 6a zeigt links die Platzierung eines erfindungsgemäßen Ausführungsbeispiels der Vorrichtung auf einem Rohr 100 zu Beginn des Verfahrens. Der erste 10 und zweite Ring 11 befindet sich jeweils nahe an einem der beiden Rohrenden. Dabei ist der erste Ring 10 dem wandseitigen Rohrende und der zweite Ring 11 dem produktseitigen Rohrende nähergelegen. Die relative Position der Ringe 10, 11 ist aber beliebig, solange der Abstand zwischen den Ringen 10, 11 größer als der abzulängende Rohrabschnitt ist. Die Ringe 10, 11 sind auf dem Rohr 100 verschiebbar und der Abstand zwischen den Ringen 10, 11 ist veränderbar.

Figur 6a zeigt rechts das Ergebnis des wandseitigen Einschiebens des Rohres 100, wodurch der erste Ring 10 in Produktrichtung verschoben wird. Durch die wandseitige Einschubtiefe des Rohres 100 wird ein Teil des abzulängenden Abstands des Rohres 100 bestimmt.

Figur 6b zeigt links das Fixieren des ersten Rings 10 auf dem Rohr 100. Durch Betätigen des Schiebemechanismus 13 am ersten Ring 10 in Umfangsrichtung wird der erste Ring 10 auf dem Rohr 100 fixiert, wodurch ein unbeabsichtigtes Verschieben des ersten Rings 10 im nächsten Verfahrensschritt vermieden wird. Der zweite Ring 11 ist auf dem Rohr 100 verschiebbar, wodurch der Abstand zwischen den Ringen 10, 11 variabel ist.

Figur 6b zeigt rechts das Ergebnis des produktseitigen Einschiebens des Rohres 100, wodurch der zweite Ring 11 in Wandrichtung verschoben wird. Durch die produktseitige Einschubtiefe des Rohres 100 wird ein weiterer Teil des abzulängenden Abstands des Rohres 100 bestimmt. Figur 6b zeigt rechts ferner, dass der Abstand zwischen den Ringen 10, 11 durch Betätigen der Klemmelemente 16 des Sperrmechanismus 14 fixiert wird. Der fixierte Abstand zwischen den Ringen 10, 11, entspricht jener Länge des Rohres 100, die abgelängt oder angezeichnet werden soll.

Figur 6c zeigt links eine Positionsveränderung der Ringe 10, 11 auf dem Rohr 100, die durch manuelles Verschieben Ringe 10, 11 mit fixiertem Abstand auf dem Rohr 100 erzielt wird. Dabei werden die Ringe 10, 11 auf dem Rohr 100 verschoben bis der erste Ring 10 bündig mit dem wandseitigen Rohrende abschließt.

Figur 6c zeigt rechts das Fixieren der Ringe 10, 11 auf dem Rohr 100. Durch Betätigen des Schiebemechanismus 13 in Umfangsrichtung am ersten 10 und zweiten Ring 11, werden die Ringe 10, 11 auf dem Rohr 100 fixiert. Auf diese Weise wird sichergestellt, dass die Position der Ringe 10, 11 durch unbeabsichtigtes Verrutschen im weiteren Verlauf des Verfahrens unverändert bleibt und ein sicheres Ablängen oder Anzeichnen des Rohres 100 ermöglicht wird.

Die in Figur 6c dargestellte Position der Ringe 10, 11 auf dem Rohr 100 sowie die Position des Schiebemechanismus 13 und der Klemmelemente 16 ist für das Ablängen und/oder Anzeichnen des Rohres 100 von Bedeutung. Durch Drücken und Drehen des Mechanismus zum Anzeichnen 19 oder des Schneidmechanismus 17 wird das Rohr angezeichnet oder abgelängt.

### Bezuaszeichenliste

- 10: erster Ring
- 11: zweiter Ring
- 12: Abstandshaltereinrichtung
- 13: Schiebemechanismus
- 14: Sperrmechanismus
- 15: Verbindungselement
- 16: Klemmelement
- 17: Schneidmechanismus
- 18: integrierte Schneide
- 19: Mechanismus zum Anzeichnen
- 100: Rohr

## Patentansprüche

1. Vorrichtung zum Ablängen und/oder Anzeichnen eines Rohres (100) für ein Sanitärprodukt, mit Ringen, insbesondere einem ersten und zweiten Ring (10, 11), und einer Abstandshaltereinrichtung (12), die die Ringe (10, 11) abstandsvariabel verbindet, wobei die Ringe (10,11) auf dem Rohr (100) im Gebrauch verschiebbar sind und der Abstand zwischen den Ringen (10,11) durch die Abstandshaltereinrichtung (12) fixierbar ist.

2. Vorrichtung zum Ablängen und/oder Anzeichnen eines Rohres (100) nach Anspruch 1
**dadurch gekennzeichnet, dass**
die Ringe (10, 11) auf dem Rohr (100) fixierbar sind.

3. Vorrichtung zum Ablängen und/oder Anzeichnen eines Rohres (100) nach Anspruch 1 oder 2
**dadurch gekennzeichnet, dass**
wenigstens ein Ring, insbesondere der erste und zweite Ring (10, 11), auf dem Rohr durch einen Schiebemechanismus (13) fixierbar ist, der in Umfangsrichtung des Rings (10,11) betätigbar ist.

4. Vorrichtung zum Ablängen und/oder Anzeichnen eines Rohres (100) nach einem der vorhergehenden Ansprüche
**dadurch gekennzeichnet, dass**
die Abstandshaltereinrichtung (12) einen Sperrmechanismus (14) aufweist, durch den der Abstand zwischen den Ringen (10,11) fixierbar ist, wobei der Sperrmechanismus (14) am ersten Ring (10) befestigt ist.

5. Vorrichtung zum Ablängen und/oder Anzeichnen eines Rohres (100) nach einem der vorhergehenden Ansprüche
**dadurch gekennzeichnet, dass**
die Abstandshaltereinrichtung (12) ein flexibles Verbindungselement (15) aufweist, das bandartig ausgestaltet ist.

6. Vorrichtung zum Ablängen und/oder Anzeichnen eines Rohres (100) nach den Ansprüchen 4 oder 5
**dadurch gekennzeichnet, dass**
der Sperrmechanismus (14) wenigstens ein Klemmelement (16) umfasst, mit dem das Verbindungselement (15) arretierbar ist.

7. Vorrichtung zum Ablängen und/oder Anzeichnen eines Rohres (100) nach Anspruch 1
**dadurch gekennzeichnet, dass**
der zweite Ring (11) mit einem Schneidmechanismus (17) verbunden oder anschließbar ist, mit dem das Rohr (100) ablängbar ist.

8. Vorrichtung zum Ablängen und/oder Anzeichnen eines Rohres (100) nach Anspruch 7
**dadurch gekennzeichnet, dass**
der Schneidmechanismus (17) eine integrierte Schneide (18), insbesondere ein Messer oder ein Stichbeitel, umfasst, wobei der Schneidmechanismus (17) in Umfangsrichtung des Rings (11) drehbar am zweiten Ring (11) befestigt ist.

9. Vorrichtung zum Ablängen und/oder Anzeichnen eines Rohres (100) nach Anspruch 7
**dadurch gekennzeichnet, dass**
der Schneidmechanismus (17) ein anschließbares Schneidwerkzeug, insbesondere eine Stichsäge, einen Elektrobohrer oder einen Laser, umfasst.

10. Vorrichtung zum Ablängen und/oder Anzeichnen eines Rohres (100) nach Anspruch 1
**dadurch gekennzeichnet, dass**
der zweite Ring (11) mit einem Mechanismus zum Anzeichnen (19) des Rohres (100), insbesondere einem Körner, verbunden ist, wobei der Mechanismus zum Anzeichnen (19) in Umfangsrichtung des Rings (11) drehbar am zweiten Ring (11) befestigt ist.

11. Verfahren zum Ablängen und/oder Anzeichnen eines Rohres (100) für ein Sanitärprodukt, mit Ringen, insbesondere einem ersten und zweiten Ring (10,11), und einer Abstandshaltereinrichtung (12), die die Ringe (10,11) abstandsvariabel verbindet, mit den folgenden Schritten
- Verschieben der Ringe (10,11) auf dem Rohr (100), wobei der erste Ring (10) durch wandseitiges Einschieben des Rohres (100) in Produktrichtung verschoben wird und der zweite Ring (11) durch produktseitiges Einschieben des Rohres (100) in Wandrichtung verschoben wird;
- Fixieren des Abstands zwischen den Ringen (10,11) durch die Abstandshaltereinrichtung (12);
- Verschieben der Ringe (10,11) mit fixiertem Abstand an das Ende des Rohres (100) bis der erste Ring (10) bündig mit dem wandseitigen Rohrende abschließt; und
- Ablängen und/oder Anzeichnen des Rohres (100) am zweiten Ring (11).
